(19) Europäisches Patentamt
European Patent Office
Office européen des brevets

(11) EP 4 056 262 A1

(12) EUROPEAN PATENT APPLICATION
published in accordance with Art. 153(4) EPC

(43) Date of publication:
**14.09.2022 Bulletin 2022/37**

(21) Application number: **20886052.8**

(22) Date of filing: **21.07.2020**

(51) International Patent Classification (IPC):
***B01J 13/16** (2006.01)* ***B01J 13/18** (2006.01)*
***C11D 3/00** (2006.01)*

(52) Cooperative Patent Classification (CPC):
**B01J 13/16; B01J 13/18; C11D 3/00**

(86) International application number:
**PCT/KR2020/009600**

(87) International publication number:
**WO 2021/091046 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2019 KR 20190140514**
**18.12.2019 KR 20190169897**
**18.12.2019 KR 20190169898**

(71) Applicant: **LG Household & Health Care Ltd.**
**Seoul 03184 (KR)**

(72) Inventors:
- **YEOM, Jun Seok**
  **Seoul 07795 (KR)**
- **HWANG, Ihn**
  **Seoul 07795 (KR)**
- **PARK, No Jin**
  **Seoul 07795 (KR)**
- **SHIM, Woo Sun**
  **Seoul 07795 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) BIODEGRADABLE MICROCAPSULE AND METHOD FOR MANUFACTURING SAME

(57) The present invention relates to a method of preparing microcapsules, and the microcapsules prepared according to the preparation method of the present invention can exhibit high versatility, natural degradability and long-term stability, and the active substance in the capsule can be stably loaded in the capsule even in the presence of a surfactant.

Fig. 1

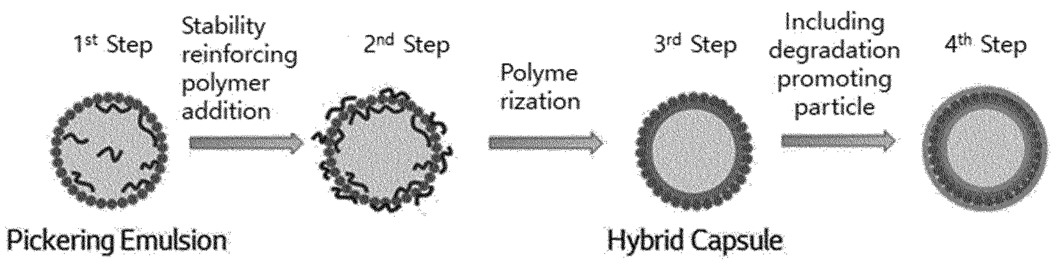


EP 4 056 262 A1

## Description

### 1. Field of the Invention

The present invention relates to a method of preparing naturally degradable microcapsules and to microcapsules prepared according to the method.

### 2. Discussion of Related Art

Encapsulation methods are used for effective delivery of an active component, and even with the use of a small dose, precise delivery can be carried out to reduce problems relating to side effects, maintenance of stability of the active component and costs, and therefore, they are applied for various forms and purposes in industrial fields, such as targeted delivery of drugs in the medical/pharmaceutical field, maintaining the stability of perfumes in sanitary products and aroma at the time users desire, maintaining the stability of an efficacious substance against external stimuli such as light, heat and the like in the cosmetic field, insecticides in the agricultural field, and enhancing the stability and absorption efficiency of nutritional components in the food field.

International organizations are pointing out microcapsules as one of the causes of microplastic pollution (a polymer that is arbitrarily made by a human having a diameter of 5 mm or less and accumulates without being degraded upon release into nature) that can accumulate without degradation in nature and cause serious environmental pollution. However, capsules made of inorganic particles for the purpose of deviating from the microplastic category are easily broken by the tension or impact generated during drying, and when they are made of natural polymers, there is a problem that the active component inside the capsules is eluted due to the micro porosity inherent in the material and the stability of the capsules cannot be maintained, and there is the problem that when crosslinking is used for reducing the micro porosity and increasing the stability, degradability is lowered. In addition, the use of a substance in which an ester bond is introduced so as to be easily degraded does not withstand the harsh conditions of the formulation (pH change, temperature change) and thus is degraded before use, but to this day, no solution is known or there is no solution.

The degradation of substances in the actual natural environment occurs by microorganisms and light, hydrolysis and the like, and in the degradability of substances specified by the international standard measurement method, a degradation method by microorganism and light is specified. More specifically, based on the OECD 301D test method, it is classified as a "immediately degraded substance" when the degradation by microorganisms is 60% or more in the dark at room temperature for 28 days, a "biodegradable substance" in the case of 20 to 60%, and a "non-degradable substance" below 20%, but based on the OECD 316 test method, a method for measuring the degree of degradation that occurs when light is irradiated for 12 hours and a total of 30 days using a xenon lamp in a water-based condition is shown. In the case where a hydrocarbon material is degraded into water and carbon dioxide, there is an example where degradation is promoted by introducing a photocatalyst because light alone has insufficient energy to induce chemical degradation in the actual natural environment, but there is a limit in that complete degradation is difficult in the case of a material having a hydrocarbon chain as a main component, such as polyethylene, polypropylene, and polystyrene.

Meanwhile, since the active component is usually a monomolecular substance having high permeability or a strong oxidation property, and thus there is a problem that the active component is oxidized by an oxidizing material such as oxygen, active oxygen, and free radicals permeating from the external environment, there is an increasing interest in a method for enhancing the insulating property of a capsule membrane for maintaining the stability of the capsule against oxidation. Materials used for encapsulation for effective loading of the active component are used in a wide spectrum from an organic polymer to an inorganic material, and methods such as polymer interfacial polymerization, layer-by-layer through ionic bonding, solidification through a change in solubility depending on pH, and the like have been proposed for decreasing the permeability of a capsule membrane. However, even if the capsule membrane is reinforced by these methods, there is a limit that the active component is eluted in a harsh environment in the presence of a surfactant, an ionic component, and a solvent in the formulation.

For example, in the case of a capsule made by interfacial polymerization of polyurea, it has been reported that the release performance of the active component is excellent, but the active component is eluted by the surfactant and there is a problem in stability. In another example, in US 9,944,886 B2 and J. Hitchcock et al., Long-Term Retention of Small, Volatile Molecular Species within Metallic Microcapsules, ACS Appl. Mater. Interfaces 2015, 7, 27, 14808-14815, in the case of a capsule made of polymethacrylate which is a highly hydrophobic substance, a method of coating the capsule with a metal having an interatomic spacing of several angstroms (Å) and from which the active component hardly escapes is used in order to solve this by being eluted in water in an organic solvent to improve the stability of the capsule, but the usable substance is limited to gold or silver, and there is a limit to commercialization. As another example, in US 9,943,487 B2, dopamine is coated on the outer wall of the capsule in order to increase the stability of the capsules, and the stability against heat and an organic solvent is increased, but there is a problem that the production method is difficult and commercialization is limited.

Therefore, there is a need for the development of a capsule material which not only decomposes when discharged in nature and has high versatility and stability without causing environmental pollution, but also is easily produced, has high economic feasibility, and can easily control the activity of the active component.

SUMMARY OF THE INVENTION

The present inventors have studied to develop microcapsules that maintain long-term stability and have excellent natural degradability by preventing the elution of an active substance to be loaded, and as a result, have found that when a Pickering emulsion is prepared using a first encapsulating component, a second encapsulating ingredient, a first capsule reinforcing component and a second capsule reinforcing component, and the Pickering emulsion is encapsulated, it is possible to produce microcapsules that not only have a high versatility and excellent in the nature and the stability but also can easily adjust the activity of the active substance, and completed the present invention based on the above.

Accordingly, it is an object of the present invention to provide a method of preparing microcapsules having high versatility, natural degradability and stability, and microcapsules prepared by the method.

As a means for solving the above problems, the present invention provides a method of preparing a microcapsule, including:

preparing a Pickering emulsion by mixing a continuous phase 1 including inorganic particles and a first encapsulating component, and a dispersed phase 1 including a second encapsulating component and a first capsule reinforcing component; and

mixing and encapsulating a continuous phase 2 including the second capsule reinforcing component and the Pickering emulsion;

The first encapsulating component and the second capsule reinforcing component may each or both include two or more amine groups or hydroxyl groups,

The second encapsulating component and the first capsule reinforcing component may each or both include two or more functional groups selected from the group consisting of an amine group, an isocyanate group, an acyl halide group, a chloroformate group, and an acrylate group.

In addition, it is possible to provide a microcapsule prepared according to the preparation method.

The present invention may also provide microcapsules including an inorganic particle, a first encapsulating component, a second encapsulating component, a first capsule reinforcing component and a second capsule reinforcing component.

The first encapsulating component and the second capsule reinforcing component may have one or more identical functional groups, which may in particular be amine groups. The second encapsulating component and the first capsule reinforcing component may have one or more identical functional groups, which may in particular be isocyanate groups.

Hereinafter, the configuration of the present invention will be described in detail.

The method of preparing the microcapsules of the present invention includes:

preparing a Pickering emulsion by mixing a continuous phase 1 including inorganic particles and a first encapsulating component, and a dispersed phase 1 including a second encapsulating component and a first capsule reinforcing component; and

mixing and encapsulating a continuous phase 2 including the second capsule reinforcing component and the Pickering emulsion.

More specifically, the present invention includes preparing a continuous phase 1 including inorganic particles and a first encapsulating component.

The solvent of the continuous phase 1 may include all solvents commonly used in the art.

In one embodiment, the solvent of the continuous phase 1 may be distilled water.

In the present invention, the inorganic particles are added for the purpose of forming the Pickering emulsion, which is the basic structure of the microcapsule, and may be a metal, a non-metal, or a mixture thereof, but is not limited thereto. In the present invention, the type of inorganic particles is not limited as long as the inorganic particles are not dissolved in the aqueous phase and can be adsorbed to the dispersed phase. For example, the inorganic particles may be selected from metals such as titanium, vanadium, manganese, iron, cobalt, nickel, copper, niobium, molybdenum, ruthenium, rhodium, palladium, silver, zinc, hafnium, tantalum, tungsten, iridium, platinum, gold, indium, tin, calcium, aluminum or magnesium; non-metals such as silica of phyllosilicate, inosilicate, sorosilicate or tectosilicate; or mixtures thereof.

In one embodiment, the inorganic particles may be silica.

In addition, the inorganic particles may have a diameter of 1 to 900 nm, for example, a diameter of 1.5 to 750 nm, and a diameter of 2 to 500 nm.

In the present invention, the content of the inorganic particles may be 0.001 to 5 parts by weight, such as 0.005 to 4 parts by weight, 0.01 to 3 parts by weight, 0.1 to 2 parts by weight, 0.5 to 1.5 parts by weight, based on the total weight of the composition for the preparation of microcapsules.

In the present invention, the "first encapsulating component" refers to a biodegradable polymer, which can be included to dissolve in the continuous phase and undergo an interfacial polymerization reaction with a second encapsulating component present in the dispersed phase described below to form and readily degrade the outer wall of the capsule.

In the present invention, the first encapsulating component is not particularly limited as long as it is a biodegradable polymer having an amine group and/or a hydroxyl group in the molecule. The biodegradable polymer may be a natural component or a synthetic component, and may be a monomer, an oligomer, or a polymer. The natural component may include polysaccharides such as cellulose, hyaluronic acid, xanthan gum, chitosan or heparin; some modified substances of polysaccharides such as hydroxyethylcellulose or hydroxypropylcellulose; nucleic acids such as DNA or RNA; proteins such as collagen, gelatin or silk fibroin; or a polypeptide such as polylysine, polyglutamic acid or polyarginine. The synthetic component may include a component having a hydroxyl group, a carboxyl group, or an amine group, such as polyester, polyphosphazane, polyamino acid or polyorthoester.

In addition, the first encapsulating component may include a component including an amine group and/or a hydroxyl group as well as a surface-modified component to include the functional group. That is, in the present invention, the first encapsulating component may include two or more amine groups; two or more hydroxyl groups; or both components having two or more amine groups and two or more hydroxyl groups.

In addition, the first encapsulating component may have a molecular weight of 200 Da to 1,000,000 Da, for example, a molecular weight of 500 Da to 500,000 Da, and a molecular weight of 1,000 Da to 100,000 Da. In addition, the first encapsulating component may be included in an amount of 0.01 to 20 parts by weight, for example, 0.05 to 15 parts by weight, 0.1 to 10 parts by weight, 0.5 to 5 parts by weight, 0.01 to 10 parts by weight, 0.05 to 5 parts by weight, 0.1 to 1 parts by weight, and 0.25 to 0.75 parts by weight, based on the total weight of the composition for preparing microcapsules. In the present invention, when the molecular weight of the first encapsulating component is less than 200 Da or the content is less than 0.01 parts by weight, since there are few functional groups that can participate in the reaction for forming the outer wall of the microcapsule, a problem of no crosslinking may occur, and when the molecular weight of the first encapsulating component is more than 1,000,000 Da or the content is more than 20 parts by weight, the viscosity increases, so that the outer wall of the microcapsule is not formed and a hydrogel is formed.

In one embodiment, the first encapsulating component may be chitosan.

The continuous phase 1 including the inorganic particles and the first encapsulating component may be mixed with the dispersed phase 1 including the second encapsulating component and the first capsule reinforcing component to prepare a Pickering emulsion.

Accordingly, the present invention includes the preparing a dispersed phase 1 including a second encapsulating component and a first capsule reinforcing component.

As the solvent of the dispersed phase 1, a solvent that is not mixed with the continuous phase may be selected. In the present invention, when the solvent of the continuous phase 1 is distilled water, the solvent of the dispersed phase 1 may be one selected from the group consisting of a hydrocarbon solvent having a linear or non-linear structure such as pentane, hexane, cyclohexane, heptane, octane, isododecane or dodecane; a solvent including an ether group such as ethyl ether, butyl ether, or methyl butyl ether; a solvent including an ester group such as ethyl acetate, butyl acetate or ethyl butyrate; a solvent including a ketone group such as methyl ethyl ketone; a solvent including benzene, such as benzene, toluene or xylene; haloalkane solvents such as dichloromethane, dichloroethane, chloroform or carbon tetrachloride; or silicone-based solvents such as dimethicone or cyclomethicone. The solvent may be applied in a continuous phase as necessary.

In addition, as the solvent, an active substance for loading in the microcapsule may be selected. In the present invention, the active substance is a substance that can be loaded in the microcapsule and maintain its activity, and means a substance whose activity is expressed when the outer wall of the microcapsule is destroyed. When the active substance is a liquid at room temperature, it may be included as a solvent in the dispersed phase. The active substance may be, but is not limited to, a fragrance oil, sunscreen, dye, catalyst, antioxidant, or drug.

The continuous phase 1 may be mixed with the dispersed phase 1 including the second encapsulating component and the first capsule reinforcing component to prepare a Pickering emulsion.

The second encapsulating component and the first capsule reinforcing component are substances that react with the first encapsulating component dissolved in the continuous phase to form the outer wall of the capsule and reduce material permeability of the capsule, and a material that is well soluble in the dispersed phase may be selected. The second encapsulating component means a component capable of reacting with the first encapsulating component to form an interfacially polymerizable polymer such as a polyurea, polyurethane, polyacylamine, polyoxime, polycarbamate,

polyester, polyamineester or polyamide to make a capsule structure. The second encapsulating component may be a monomer, oligomer or polymer.

The second encapsulating component may be a compound represented by the following Chemical Formula 1:

[Chemical Formula 1]

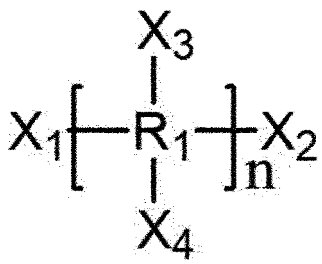

In Chemical Formula 1, $R_1$ is an acrylate group or an alkylene group having 1 to 50 carbon atoms in which a hetero atom is substituted or unsubstituted; cyclic hydrocarbons having 3 to 60 carbon atoms; or a compound including an alkylene group having 1 to 50 carbon atoms and a cyclic, $X_1$ to $X_4$ are each independently selected from the group consisting of hydrogen, an amine group, an acyl halide group, an isocyanate group, a chloroformate group and an acrylate group, and n is an integer greater than or equal to 1.

In Chemical Formula 1, at least two of $X_1$ to $X_4$ have an amine group, an acyl halide group, an isocyanate group, a chloroformate group, and an acrylate group, and n may be an integer of 1 to 3.

In one embodiment, the second encapsulating component may be polyisocyanate.

The second encapsulating component may be included in an amount of 0.001 to 10 parts by weight, for example, 0.005 to 8 parts by weight, 0.01 to 5 parts by weight, 0.05 to 1 parts by weight, 0.1 to 0.5 parts by weight, 0.001 to 0.5 parts by weight, and 0.125 to 0.375 parts by weight, based on the total weight of the composition for preparing microcapsules. When the content of the second encapsulating component is less than 0.001 parts by weight, even if the encapsulation reaction occurs, a problem may occur in which the outer wall of the capsule is formed thin to the extent of not being maintained, and when it exceeds 10 parts by weight, the viscosity increases and there may occur a problem that the capsule is not formed.

The first capsule reinforcing component is a material capable of increasing the density of the outer wall of the microcapsule, and may include a material having a ring structure or an inorganic material. The first capsule reinforcing component has little compatibility with the continuous phase and the dispersed phase, and when formed in the outer wall of the capsule, it may be included to prevent the active substance loaded inside the capsule from eluting out or delay the elution rate.

Since the first capsule reinforcing component is reacted with the first encapsulating component and/or the second capsule reinforcing component to form interfacial polymerizable polymers such as polyurea, polyurethane, polyacylamine, polyoxime, polycarbamate, polyester, polyamineester or polyamide, it may include a component having a ring structure among components capable of forming a capsule structure.

The first capsule reinforcing component may include one or more compounds selected from the group consisting of a monomer represented by the following Chemical Formula 2, methylene diphenyl diisocyanate, naphthalene diisocyanate, and isophorone diisocyanate; an oligomer thereof; or a polymer thereof:

[Chemical Formula 2]

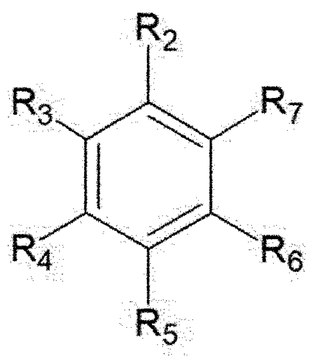

In Chemical Formula 2, $R_2$ to $R_7$ each independently includes hydrogen; an alkyl group having 1 to 5 carbon atoms; an alkenyl group having 2 to 5 carbon atoms; an alkyl isocyanate having 1 to 5 carbon atoms; an isocyanate group; an alkylacyl halide group having 1 to 5 carbon atoms; an acyl halide group; an alkylchloroformate group having 1 to 5 carbon atoms; a chloroformate group; an alkyl acrylate group having 1 to 5 carbon atoms; or an alkylacrylate group, and one or more of $R_2$ to $R_7$ in Chemical Formula 2 is a compound that may include one of an isocyanate group, an acyl halide group, a chloroformate group, or an acrylate group. In Chemical Formula 2, the monomer may be a polymer in which 1 to 13 monomers are polymerized. When the number of monomers is 13 or more, the stiffness of the material increases and thus it is easily broken during the manufacturing process of the capsule, or a problem that the capsule shape cannot be maintained due to the tension generated during drying of the capsule may occur.

In one embodiment, the first capsule reinforcing component may be methyldiphenyl diisocyanate, naphthalene diisocyanate, isophorone diisocyanate or xylene diisocyanate as an isocyanate-including component.

The first capsule reinforcing component is capable of reacting with an amine group or a hydroxyl group of the first encapsulating component together with the second encapsulating component, and the functional groups may be differently selected depending on whether an amine group or a hydroxyl group is included in the molecule of the first encapsulating component.

In one embodiment, when the first encapsulating component has two or more amine groups, the first capsule reinforcing component and/or the second encapsulating component may each have two or more acrylate groups or isocyanate groups. In the microcapsule according to the present invention, when the first encapsulating component has an amine group and the first capsule reinforcing component and/or the second encapsulating component has an acrylate group, a polybetaamino ester microcapsule can be formed; when the first capsule reinforcing component and/or the second encapsulating component have isocyanate groups, a polyurea microcapsule can be formed.

In the present invention, the component having an isocyanate group may be selected from the group consisting of methylene diisocyanate, 1,4-phenylene diisocyanate, tolylene-2,4-diisocyanate, 1-chloromethyl-2,4-diisocyanatobenzene, 4-Chloro-6-methyl-1,3-phenylene diisocyanate, 1,3-Bis(1-isocyanato-1-methylethyl)benzene, 3,3'-dimethyl-4,4'-biphenylene diisocyanate, 3,3'-Dichloro-4,4'-diisocyanato-1,1'-biphenyl, 4,4'-Oxybis(phenylisocyanate), 4,4'-Methylenebis(phenylisocyanate), 4,4'-Methylenebis(2,6-diethylphenyl isocyanate), isophorone diisocyanate, trans-1,4-Cyclohexylene diisocyanate, 1,3-Bis(isocyanatomethyl)cyclohexane, 4,4'-Methylenebis(cyclohexyl isocyanate), diisocyanatobutane, hexamethylenediisocyanate, diisocyanatooctane, diisocyanatododecane and 1,6-Diisocyanato-2,2,4-trimethylhexane, but is not limited thereto.

In the present invention, the component having an acrylate group may be selected from the group consisting of ethylene glycol diacrylate, di(ethylene glycol) diacrylate, tri(ethylene glycol) diacrylate, tetra(ethylene glycol) diacrylate, poly(ethylene glycol) diacrylate, propylene glycol diacrylate, di(propylene) glycol) diacrylate, tri(propylene glycol) diacrylate, tetra(propylene glycol) diacrylate, poly(propylene glycol) diacrylate, butanediol diacrylate, hexanediol diacrylate, hexanediol ethoxylate diacrylate, neopentyl glycol propoxylate (1 PO/OH) diacrylate, trimethylolpropane ethoxylate (1) EO/OH) methyl ether diacrylate, neopentyl glycol diacrylate, pentaerythritol triacrylate, trimethylolpropane triacrylate, trimethylolpropane propoxylate triacrylate, tris[2-(acryloyloxy)ethyl] isocyanurate, trimethylolpropane ethoxylate triacrylate, di(trimethylolpropane) tetraacrylate, tetraival pentaeryth 6-(acryloyloxy)hexanoate], but is not limited thereto.

In another embodiment, when the first encapsulating component has two or more hydroxyl groups, the first capsule reinforcing component and/or the second encapsulating component each have two or more isocyanate groups, acyl halide groups, chloroformate groups or acrylic groups. In the microcapsule according to the present invention, when the first encapsulating component has a hydroxyl group and the first capsule reinforcing component and/or the second encapsulating component has an isocyanate group, a polyurethane microcapsule can be formed; when the first capsule reinforcing component and/or the second encapsulating component have an acyl halide group, chloroformate group or acrylate group, a polyester microcapsule can be formed.

In the present invention, the component having a chloroformate group may be selected from the group consisting of ethylenebis(chloroformate), diglycolyl chloride, oxydiethylene bis(chloroformate), tri(ethylene glycol) bis(chloroformate), 1,4-phenylene bis(chloroformate), bisphenol A bis(chloroformate) and bisphenol Z bis(chloroformate), but is not limited thereto.

In the present invention, the component having an acyl halide group may be selected from the group consisting of malonyl chloride, succinyl chloride, glutaryl chloride, adipoyl chloride, pimeloyl chloride, suberoyl chloride, sebacoyl chloride, azelaic acid dichloride and dodecanedioyl dichloride, but is not limited thereto.

The first capsule reinforcing component may be included in an amount of 0.001 to 10 parts by weight, such as 0.005 to 8 parts by weight, 0.01 to 5 parts by weight, 0.05 to 1 parts by weight, 0.1 to 0.5 parts by weight, and 0.125 to 0.375 parts by weight, based on the total weight of the composition for preparing microcapsules. When the content of the first capsule reinforcing component is lower than 0.001 parts by weight, even if the encapsulation reaction occurs, a problem may occur in which the outer wall of the capsule is formed thin to the extent of not being maintained, and when it exceeds 10 parts by weight, the viscosity increases and there may occur a problem that the capsule is not formed.

In the present invention, the step of mixing the continuous phase 1 and the dispersed phase 1 to form a Pickering

emulsion may include stirring a continuous phase 1 including inorganic particles and a first encapsulating component, and a dispersed phase 1 including a second encapsulating component and a first capsule reinforcing component. At this time, the stirring conditions for the components to react may be a stirring speed of 10 to 16,000 rpm, for example, 50 to 13,000 rpm, 100 to 10,000 rpm at room temperature, for example, 20 to 30°C. Since the encapsulation reaction carried out thereafter reacts the reactive polymer at the interface between the immiscible dispersed phase and continuous phase to form a film of the capsule, the size of the capsule can be adjusted by forming the Pickering emulsion before the encapsulation reaction occurs.

In the present invention, "Pickering emulsion" means an emulsion form in which the interface is stabilized by solid particles. A Pickering emulsion has the advantage of reducing the risk of environmental pollution because it can form an emulsion without using an emulsifier. However, in order to apply the Pickering emulsion to a product, there is a problem in that it is necessary to solve the stability problem and the long-term stability problem due to shear stress in the reactor.

In addition, the present invention includes mixing and encapsulating the Pickering emulsion and the continuous phase 2 including the second capsule reinforcing component.

The solvent of the continuous phase 2 may include all solvents commonly used in the art, similarly to the solvent of the continuous phase 1.

In the present invention, the second capsule reinforcing component may include one or more compounds selected from the group consisting of a monomer represented by the following Chemical Formula 3, melamine, and benzidinedisulfonic acid; an oligomer thereof; or a polymer thereof:

[Chemical Formula 3]

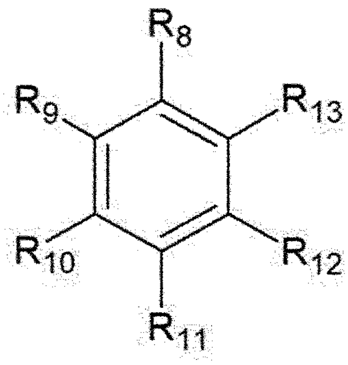

In Chemical Formula 3, $R_8$ to $R_{13}$ each independently include hydrogen; an amine group; a hydroxyl group; an alkyl group having 1 to 5 carbon atoms; an alkylamine group having 1 to 5 carbon atoms; a hydroxyalkyl group having 1 to 5 carbon atoms; or an alkenyl group having 2 to 5 carbon atoms, and in Chemical Formula 3, one or more of Rs to $R_{13}$ is a compound in which either an amine group or a hydroxyl group may be included.

In one embodiment, the second capsule reinforcing component may be phenylenediamine, aminobenzylamine or benzidinedisulfonic acid.

In the above step, since the second capsule reinforcing component has strong reactivity, it must be uniformly coated on the wall surface of the capsule to form a microcapsule with excellent stability. Accordingly, the second capsule reinforcing component may be post-added after preparing the Pickering emulsion.

The second capsule reinforcing component may be included in an amount of 0.001 to 10 parts by weight, such as 0.005 to 8 parts by weight, 0.01 to 5 parts by weight, 0.05 to 3 parts by weight, 0.1 to 1 parts by weight, and 0.5 to 0.75 parts by weight, based on the total weight of the composition for preparing microcapsules. When the content of the second capsule reinforcing component is lower than 0.001 parts by weight, even if the encapsulation reaction occurs, a problem may occur in which the outer wall of the capsule is formed thin to the extent of not being maintained, and when it exceeds 10 parts by weight, the viscosity increases and there may occur a problem that the capsule is not formed.

In the present invention, the first encapsulating component and the second encapsulating component may be included in an amount of a weight ratio of 1: 0.1 to 100, for example, a weight ratio of 1: 0.1 to 50, 1: 0.1 to 25, a weight ratio of 1: 0.1 to 10, a weight ratio of 1: 0.1 to 1, a weight ratio of 1: 0.25 to 1, and a weight ratio of 0.3 to 0.8, and a weight ratio of 0.4 to 0.6, and the first encapsulating component and first capsule reinforcing component be included in an amount of a weight ratio of 1: 0.1 to 1, for example, a weight ratio of 1: 0.25 to 1, a weight ratio of 0.3 to 0.8, and a weight ratio of 0.4 to 0.6. Also, the first encapsulating component, second encapsulating component and first capsule reinforcing component may be included in an amount of a weight ratio of 1: 0.1 to 100: 0.1 to 1, for example, a weight ratio of 1: 0.1 to 50: 0.1 to 1, a weight ratio of 1: 0.1 to 25: 0.1 to 1, a weight ratio of 1: 0.1 to 10: 0.1 to 1, a weight ratio

of 1: 0.1 to 1: 0.1 to 1, a weight ratio of 1: 0.25 to 1:0.25 to 1, a weight ratio of 1: 0.3 to 0.8: 0.3 to 0.8, and a weight ratio of 1: 0.4 to 0.6: 0.4 to 0.6.

Also, the present invention may further include a capsule reinforcing inorganic precursor together with the second capsule reinforcing component in the above step. The capsule reinforcing inorganic precursor may be applied to both the inside and the outside of the microcapsule, and may be included to form a film separate from the wall of the capsule to prevent elution of the active substance inside the capsule or to delay the elution rate. In addition, it may play a role in helping to release the active substance at an appropriate time by controlling the brittleness of the capsule.

The capsule reinforcing inorganic precursor may be a compound represented by the following Chemical Formula 4:

[Chemical Formula 4]

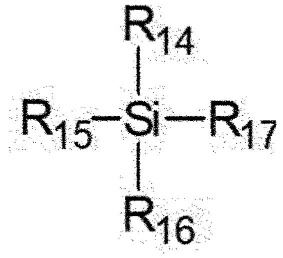

In Chemical Formula 4, $R_{14}$ to $R_{17}$ each independently may be hydrogen; an alkoxy group having 1 to 5 carbon atoms; an alkyl group having 1 to 5 carbon atoms; or a hydrocarbon compound having 1 to 5 carbon atoms including one or more functional groups selected from the group consisting of an amine group, a thiol group, a hydroxyl group, a carbonyl group, a carboxyl group, and an ether group.

The capsule reinforcing inorganic precursor may be selected from the group consisting of tetramethylorthosilicate, tetraethylorthosilicate, tetrapropylorthosilicate, tetrabutylorthosilicate, trimethoxysilane, methyltrimethoxysilane, ethyltrimethoxysilane, propyltriethoxysilane, methylpropyltrimethoxysilane, methylpropyltriethoxysilane, aminopropyltrimethoxysilane, and mercaptopropyltrimethoxysilane, but is not limited thereto.

In one embodiment, the capsule reinforcing inorganic precursor may be tetraethylorthosilicate, methyltrimethoxysilane or aminopropyltrimethylethoxysilane.

The capsule reinforcing inorganic precursor may be included in an amount of 0.01 to 10 parts by weight, for example, 0.005 to 8 parts by weight, 0.01 to 5 parts by weight, based on 100 parts by total weight of the composition. When the content of the capsule reinforcing inorganic precursor is less than 0.001 parts by weight, excellent stability cannot be imparted to the capsule, and when it is more than 10 parts by weight, a problem in which an inorganic capsule is formed and easily broken may occur.

The encapsulation reaction may occur due to contact between reactive polymers. At this time, in order to control the reaction rate, it may be carried out at a temperature of 0 to 100 °C, for example, at a temperature of 10 to 90 °C for 1 to 48 hours, for example, for 2 to 24 hours. Stirring conditions may be 10 to 6,000 rpm, for example, 50 to 5,000 rpm or 100 to 4,000 rpm.

In the following examples, it was confirmed that microcapsules prepared by using a combination of the first encapsulating component and the second capsule reinforcing component and a combination of the second encapsulating component and first capsule reinforcing component showed excellent stability and biodegradability. In particular, when the first encapsulating component and the second capsule reinforcing component are each a compound including an amine group, and the second encapsulating component and the first capsule reinforcing component are each a compound including an isocyanate group, it was confirmed that a microcapsule prepared using a combination of the above components showed the most excellent stability and biodegradability effects.

In the present invention, the method of preparing the microcapsules may further include the step of adsorbing the natural degradation promoting particles to the microcapsules. The natural degradation promoting particles may be selected from the group consisting of titanium oxide, zinc oxide, zirconium oxide, tungsten oxide, platinum and platinum oxide, and gold chloride, but is not limited thereto. The natural degradation promoting particles may be included in the first solution (continuous phase). In addition, the natural degradation promoting particles may have a diameter of 1 to 900 nm, for example, a diameter of 1.5 to 750 nm, and a diameter of 2 to 500 nm. When the size of the natural degradation promoting particles is less than 1 nm, there may be a problem in that it is difficult for the natural degradation promoting effect to appear.

The natural degradation promoting particles may be biodegradable and/or photodegradation promoting particles, preferably photodegradation promoting particles.

The natural degradation promoting particles may be included at a concentration of 0.1 to 10,000 ppm, for example, a concentration of 1 to 8,000 ppm, and a concentration of 2 to 5,000 ppm. When the concentration of the natural degradation promoting particles is lower than 0.1 ppm, the degradation promoting effect does not appear, and when it is higher than 10,000 ppm, a problem may arise in that the effect of promoting degradation is not exhibited due to interfering with the transmission of light, and viscosity is affected so that no encapsulation reaction occurs.

In the present invention, the method of preparing the microcapsules may further include adding a dispersion stabilizer after the encapsulation reaction. The dispersion stabilizer may be added to increase the dispersibility of the microcapsules produced after the reaction. Examples of the dispersion stabilizer may be selected from the group consisting of arabic gum, polysaccharide, pectin, alginate, arabinogalactan, carrageenan, gellan gum, xanthan gum, guar gum, acrylate/acrylic polymer, starch, water-swellable clay, acrylate/aminoacrylate copolymers or mixtures thereof, maltodextrin, alginate esters, gelatin, protein hydrolysates or quaternized forms thereof, synthetic polymers or copolymers such as poly(vinyl pyrrolidone-co-vinyl acetate), poly(vinyl alcohol-co-vinyl acetate), poly(maleic acid), poly(alkylene oxide), poly(vinylmethyl ether), poly(vinyl ether-co-maleic anhydride), poly(ethyleneimine), poly((meth) acrylamide), poly(alkylene oxide-co-dimethylsiloxane) and poly(aminodimethylsiloxane), but not limited thereto.

In addition, the method of preparing the microcapsules may further proceed with concentration and/or drying if necessary. In addition, the step of adjusting the pH using an acid or a basic material may be further performed.

The preparation method of the microcapsule according to the present invention is schematically shown in FIG. 1.

In addition, the present invention provides a microcapsule prepared according to the above preparation method. That is, the present invention provides microcapsules including a first encapsulating component, a second encapsulating component, a first capsule reinforcing component, a second capsule reinforcing component, and inorganic particles.

In the present invention, "microcapsule" means a capsule having a diameter in the range of 1 to 1000 μm. In the present invention, the microcapsule may have a diameter of 0.1 to 100 μm, for example, a diameter of 1 to 80 μm, and a diameter of 2 to 50 μm. The outer wall thickness of the microcapsule may be 0.03 to 10 μm.

When the diameter of the microcapsule is smaller than 0.1 μm, it is difficult to realize the effect of the capsule for releasing the active component because the capsule is not broken, and when the diameter is larger than 100 μm, the shear stress occurring in the manufacture of the product may cause problems that the capsules may easily break or impart a foreign body sensation.

The microcapsules prepared according to the preparation method of the present invention may have excellent stability and natural degradability characteristics. The natural degradability refers to a property of being degraded in nature without going through a separate process and treatment by microorganisms, light, etc. That is, the naturally degradable microcapsules of the present invention may include biodegradable and photodegradable microcapsules. Accordingly, the present invention may provide a biodegradable microcapsule and/or a photodegradable microcapsule. In the present invention, "stability" means the ability to delay or completely prevent the phenomenon that an active substance, which is usually a highly permeable monomolecular substance, spontaneously or non-spontaneously flows out from one isolated space to another, more specifically, from the inside of a capsule to an external environment, and on the other hand, may include an ability to retard or completely avoid the phenomenon in which an active substance is oxidized by an oxidizing material such as oxygen, active oxygen, free radicals, etc. penetrates from the external environment due to its strong oxidation property. Stability according to the present invention refers to the case where the amount of loaded material remaining in the capsules is 40% or more, preferably 50% or more and more preferably 60% or more compared to the initial amount of the loaded material, by placing the microcapsules containing a loaded material in an aqueous surfactant solution and storing them at a temperature of 40 to 60° C. for 7 days, followed by extraction of the loaded material in the capsule. The surfactant may include a surfactant commonly used in the art. The surfactant may be an anionic surfactant such as fatty acid sodium, monoalkyl sulfate, alkylpolyoxyethylene sulfate, alkylbenzenesulfonate or monoalkylphosphate; cationic surfactants such as dialkyldimethylammonium salts or alkylbenzylmethylammonium salts; an amphoteric surfactant such as alkylsulfobetaine or alkylcarboxybetaine; or a nonionic surfactant such as polyoxyethylene alkyl ether, fatty acid sorbitan ester, fatty acid diethanolamine or alkyl monoglyceryl ether, but is not limited thereto. In one embodiment, the surfactant may be a polysorbate nonionic surfactant.

In addition, in the present invention, "biodegradability" refers to the degree of degradation by a microorganism, and can mean that the degradation by the microorganism is 20% or more, preferably 30% or more and more preferably 40% or more in the dark at room temperature for 28 days according to the OECD 301D test method.

In addition, the "photodegradability" may mean that the degradation according to the wavelength of light is 50% or more, preferably 60% or more and more preferably 70% or more when exposed to light for a total of 30 days using a xenon lamp in a water-based condition according to OECD 316 test method.

In addition, the naturally degradable microcapsule in the present invention may mean a microcapsule having a natural degradation degree of 50% or more, preferably 60% or more, and more preferably 70% or more.

In addition, the microcapsules prepared according to the preparation method may be used as a support for a fragrance product, a functional material, or a poorly soluble material depending on the type of active substance. In the present invention, the active substance may be selected from the group consisting of fragrance oils, sunscreens, dyes,

catalysts, antioxidants and drugs.

For example, when the active substance is a fragrance oil, the present invention may provide a fragrance product including the microcapsule. The fragrance product may include, but is not limited to, a perfume spray, a perfume liquid product, a cleaning agent, a face wash, a body product, a hair product, or a fabric softener composition.

In addition, when the active substance is a sunscreen, the present invention may provide a cosmetic composition for sunscreen including the microcapsule. Examples of the sunscreen may be inorganic sunscreens such as titanium dioxide ($TiO_2$), zinc oxide (ZnO), silicate, or talc; or inorganic sunscreens such as isoamyl-p-methoxycinnamate, octylmethoxycinnamate, ethylhexyltriazone, oxybenzone, diethylaminohydroxybenzoyl hexylbenzoate, octocryleneoctylsalicylate, butylmethoxydibenzoylmethane, octylsalicylate, benzophenone, or anthranilate, but is not limited thereto.

In addition, when the active substance is a functional substance or poorly soluble substance, the microcapsule of the present invention may be provided as a support for improving the stability of the functional substance or poorly soluble substance. Examples of the functional substance or poorly soluble substance include antioxidants such as retinol or resverastrol; or it may include a poorly soluble substance such as cholesterol or ceramide, but is not limited thereto.

Advantages and features of the present invention, and a method for achieving them will become apparent with reference to the experimental examples and preparation examples described below in detail. However, the present invention is not limited to the Experimental Examples and Preparation Examples disclosed below, but may be embodied in various different forms, and is provided merely for the complete disclosure of the invention, and for the purpose of fully informing one skilled in the art to which the invention pertains.

[Effects of the Invention]

Microcapsules prepared according to the preparation method of the present invention can exhibit high versatility, degradability and long-term stability, and the active substance in the capsule can be stably loaded in the capsule even in the presence of a surfactant.

BRIEF DESCRIPTION OF THE DRAWINGS

FIG. 1 is a schematic diagram of a method of preparing a microcapsule according to the present invention.

FIG. 2 is a comparison of performance/stability in the presence of a surfactant after storing the microcapsules according to the present invention at 50 °C for 7 days.

FIG. 3 shows the results of confirming the degree of acceleration of degradation of microcapsules according to the present invention.

DETAILED DESCRIPTION OF EXEMPLARY EMBODIMENTS

Hereinafter, the present invention will be described in detail by way of Examples. The following Examples merely illustrate the present invention but do not limit the scope of the present invention.

Materials and reagents used in Examples and Comparative Examples were purchased and used from cosmetic raw material manufacturers and commercial suppliers, and the indicated content is based on weight %.

**Examples 1-6. Preparation** of Polyurea **Microcapsules**

Microcapsules were prepared according to the compositions of Table 1 below. First, 1 g of silica was dispersed in 68 g of distilled water and at the same time 1 g of the first encapsulating component (hereinafter referred to as a biodegradable polymer) which is a biodegradable polymer corresponding to each of Examples 1 to 6 was added to prepare a continuous phase 1. 0.5 g of polyisocyanate as the second encapsulating component was added to 29.5 g of dodecane to prepare a dispersed phase. Then, the dispersed phase was added to continuous phase 1 and stirred at 2,000 rpm to prepare a Pickering emulsion. Thereafter, the Pickering emulsion was subjected to interfacial polymerization at 80 °C for 12 hours to prepare polyurea microcapsules.

**Comparative Examples 1 and 2. Preparation of Polyurea Microcapsules**

Polyurea microcapsules of Comparative Examples 1 and 2 were prepared according to the compositions of Table 1 below. First, 1 g of polyethyleneimine was dissolved in 69 g of distilled water, and then a polymerization reaction was conducted at 80 °C for 12 hours while mixing a solution of 0.5 g of polyisocyanate in 29.5 g of dodecane to prepare the polyurea microcapsules of Comparative Example 1.

Next, 1 g of silica was dispersed in 68 g of distilled water and 1 g of polyethyleneimine was added thereto to prepare a continuous phase 1. 0.5 g of polyisocyanate was added to 29.5 g of dodecane to prepare a dispersed phase. Then, the dispersed phase was added to continuous phase 1 and a Pickering emulsion was prepared at 2,000 rpm. Thereafter, the Pickering emulsion was subjected to interfacial polymerization at 80 °C for 12 hours to prepare polyurea microcapsules of Comparative Example 2.

**Experimental Example 1. Comparison of degree of biodegradation of microcapsules including biodegradable polymers**

The biodegradability of the microcapsules prepared in Examples 1 to 6 and Comparative Examples 1 and 2 was compared. In this experimental example, biodegradability of microcapsules was measured using the OECD 301D method after the capsule wall was extracted. Specifically, the OECD 301D method is a test method for measuring dissolved oxygen consumption using an airtight test bottle, and is a method for measuring the biodegradability of capsules, which is a water-insoluble test substance, and the degree of biodegradation was calculated by the following General Formula 1 by measuring the biochemical oxygen demand (BOD) over time with respect to the theoretical oxygen demand (ThOD).

[General Formula 1]

$$\text{Degree of Biodegradation (\%)} = \frac{BOD}{ThOD} \times 100$$

[Table 1]

| | Com. Ex. 1 | Com. Ex. 2 | Ex. 1 | Ex. 2 | Ex. 3 | Ex. 4 | Ex. 5 | Ex. 6 |
|---|---|---|---|---|---|---|---|---|
| Distilled water | 69 | 68 | 68 | 68 | 68 | 68 | 68 | 68 |
| Silica | - | 1 | 1 | 1 | 1 | 1 | 1 | 1 |
| Polyethyleneimine | 1 | 1 | - | - | - | - | - | - |
| Chitosan | - | - | 1 | - | - | - | - | - |
| Polylysine | - | - | - | 1 | - | - | - | - |
| Gelatin | - | - | - | - | 1 | - | - | - |
| Silk fibroin | - | - | - | - | - | 1 | - | - |
| Hydrolyzed keratin | - | - | - | - | - | - | 1 | - |
| Poly(2-acrylamido glycolic acid (PAGA) | - | - | - | - | - | - | - | 1 |
| Polyisocyanate | 0.5 | 0.5 | 0.5 | 0.5 | 0.5 | 0.5 | 0.5 | 0.5 |
| Dodecane | 29.5 | 29.5 | 29.5 | 29.5 | 29.5 | 29.5 | 29.5 | 29.5 |
| Total | 100 | 100 | 100 | 100 | 100 | 100 | 100 | 100 |
| **Degree of biodegradation (%)** | **20** | **20** | **55** | **40** | **80** | **45** | **50** | **50** |

As a result of measuring the degree of biodegradation of the microcapsules according to the inclusion of the biodegradable polymer (Table 1), all of the encapsulation reactions occurred except for Comparative Example 1, which did not form a Pickering emulsion, and microcapsules of Examples 1 to 6 made of chitosan, polylysine, gelatin, silk fibroin, keratin, or PAGA as a natural biodegradable polymer showed relatively higher biodegradability than polyethyleneimine as the synthetic polymer.

**Examples 7 to 9. Preparation of Polyurea Microcapsules**

Polyurea microcapsules were prepared according to the compositions of Table 2 below. First, 1 g of silica was

dispersed in 58 g of distilled water, and 1 g of chitosan as a biodegradable polymer (first encapsulating component) was added to prepare a continuous phase 1, and 1 g of phenylenediamine as a second capsule reinforcing component was added to 9 g of distilled water to prepare a continuous phase 2. To 29.5 g of fragrance oil, 0.5 g of a combination of polyisocyanate as a second encapsulating component, and methyldiphenyldiisocyanate as a first capsule reinforcing component was added to prepare a dispersed phase. Then, the dispersed phase was added to continuous phase 1 and stirred at 2,000 rpm to prepare a Pickering emulsion. Thereafter, continuous phase 2 was added to the Pickering emulsion, and interfacial polymerization was performed at 80 °C for 12 hours to prepare polyurea microcapsules.

**Comparative Examples 3 to 7. Preparation of Polyurea Microcapsules**

Microcapsules were prepared according to the compositions of Table 2 below. The microcapsules of Comparative Example 3 were prepared in the same manner as in Examples 1 to 6, except that polyisocyanate as the second encapsulating component was not included, and Comparative Examples 4 to 6 did not include a biodegradable polymer.

**Experimental Example 2. Comparison of stability and degree of biodegradation of microcapsules including capsule reinforcing components**

The stability and biodegradability of the microcapsules prepared in Examples 7 to 9 were confirmed. In this experimental example, stability is a measure of the ability of the capsule to retain the fragrance oil in the capsule even in a harsh environment in which the surrounding environment is surrounded by an emulsifier. Specifically, the stability was compared by adding 1 part by weight of microcapsules to 5 parts by weight of an aqueous Tween 20 solution, based on 100 parts by total weight of the composition, and after storage at 50° C for 7 days, extracting perfume oil in capsules using ethanol and a tip sonicator (Fisherbrand™, Fisher Scientific, USA), and measuring the content thereof with a UV spectrometer (FastTrack™ UV Vis Technology, Mettler Toledo, USA). Biodegradability was measured in the same manner as in Experimental Example 1.

[Table 2]

| | Ex. 1 | Com. Ex. 3 | Ex. 7 | Com. Ex. 4 | Com. Ex. 5 | Com. Ex. 6 | Ex. 8 | Com. Ex. 7 | Ex. 9 |
|---|---|---|---|---|---|---|---|---|---|
| Distilled water | 68 | 68 | 68 | 68 | 68 | 68 | 68 | 68 | 68 |
| Silica | 1 | 1 | 1 | 1 | 1 | 1 | 1 | 1 | 1 |
| Chitosan | 1 | 1 | 1 | - | - | - | 0.5 | 0.5 | 0.5 |
| Phenylenediami ne | - | - | - | 1 | 1 | 1 | 0.5 | 0.5 | 0.5 |
| Polyisocyanate | 0.5 | - | 0.25 | 0.5 | - | 0.25 | 0.5 | - | 0.25 |
| Methyl diphenyl diisocyanate | - | 0.5 | 0.25 | - | 0.5 | 0.25 | - | 0.5 | 0.25 |
| Fragrance oil | 29.5 | 29.5 | 29.5 | 29.5 | 29.5 | 29.5 | 29.5 | 29.5 | 29.5 |
| Total | 100 | 100 | 100 | 100 | 100 | 100 | 100 | 100 | 100 |
| Stability(%) | 0 | 5 | 15 | 0 | 5 | 0 | 20 | 10 | 60 |
| Degree of biodegradation (%) | 55 | 40 | 45 | 20 | 20 | 20 | 45 | 35 | 40 |

As a result of the experiment, the microcapsules of Comparative Examples 4 to 6, which did not contain the biodegradable polymer, showed low biodegradability and stability, and the microcapsules of Comparative Examples 3, 5 and 7, which did not contain the second encapsulating component, exhibited low stability because the capsule wall was not densely formed. When the first capsule reinforcing component was used, it was also confirmed that the degree of biodegradation decreased according to the amount used. On the other hand, when the second encapsulating polymer and the second capsule reinforcing component were used in combination, the capsule wall was densely formed and it was confirmed that the stability of the capsule was improved.

Examples 10 to 18. **Preparation of Polyurea Microcapsules**

Polyurea microcapsules were prepared according to the compositions of Table 3 below. First, 1 g of silica was dispersed in 58 g of distilled water, and 1 g of chitosan as a biodegradable polymer was added to prepare a continuous phase 1, and 1 g of a second capsule reinforcing component (phenylenediamine, aminobenzylamine and benzidinedisulfonic acid) was added to 9 g of distilled water to prepare a continuous phase 2. A dispersed phase was prepared by adding a second encapsulating component and a first capsule reinforcing component (methyldiphenyl diisocyanate, naphthalene diisocyanate, isophorone diisocyanate and xylene diisocyanate) to 29.5 g of fragrance oil. Then, the dispersed phase was added to continuous phase 1 and stirred at 2,000 rpm to prepare a Pickering emulsion. Thereafter, continuous phase 2 was added to the Pickering emulsion, and interfacial polymerization was performed at 80 °C for 12 hours to prepare polyurea microcapsules.

**Experimental Example 3. Comparison of Stability of Microcapsules Including Capsule Reinforcing Components**

The stability and degree of biodegradation of the microcapsules prepared in Examples 10 to 18 were compared. The stability and degree of biodegradation were measured in the same manner as in Experimental Example 2.

[Table 3]

| | Ex. 10 | Ex. 11 | Ex. 12 | Ex. 13 | Com. Ex. 8 | Ex. 14 | Ex. 15 | Ex. 16 | Ex. 17 | Ex. 18 |
|---|---|---|---|---|---|---|---|---|---|---|
| Distilled water | 68 | 68 | 68 | 68 | 68 | 68 | 68 | 68 | 68 | 68 |
| Silica | 1 | 1 | 1 | 1 | 1 | 1 | 1 | 1 | 1 | 1 |
| Chitosan | 0.5 | 0.25 | 0.5 | 0.5 | 0.5 | 0.5 | 0.5 | 0.5 | 0.5 | 0.5 |
| Phenylenediamine | 0.5 | 0.75 | 0.5 | 0.5 | - | - | - | 0.5 | 0.5 | 0.5 |
| Cyclohexane diamine | - | - | - | - | 0.5 | - | - | - | - | - |
| Aminobenzyl amine | - | | | | - | 0.5 | - | | | |
| Benzidinedisulfonic acid | - | - | - | - | - | - | 0.5 | - | - | - |
| Polyisocyanate | 0.25 | 0.25 | 0.12 5 | 0.375 | 0.25 | 0.25 | 0.25 | 0.25 | 0.25 | 0.25 |
| Methyl diphenyl diisocyanate | 0.25 | 0.25 | 0.37 5 | 0.125 | 0.25 | 0.25 | 0.25 | - | - | - |
| Naphthalene diisocyanate | - | - | - | - | - | - | - | 0.25 | - | - |
| Isophorone diisocyanate | - | - | - | - | - | - | - | - | 0.25 | - |
| Xylene diisocyanate | - | - | - | - | - | - | - | - | - | 0.25 |
| Fragrance oil | 29.5 | 29.5 | 29.5 | 29.5 | 29.5 | 29.5 | 29.5 | 29.5 | 29.5 | 29.5 |
| Total | 100 | 100 | 100 | 100 | 100 | 100 | 100 | 100 | 100 | 100 |
| Stability(%) | 60 | 55 | 50 | 40 | 25 | 55 | 40 | 55 | 50 | 55 |
| Degree of biodegradation (%) | 40 | 30 | 40 | 40 | 40 | 40 | 40 | 40 | 40 | 40 |
| Natural degradation (%) | 76 | 68.5 | 70 | 64 | 55 | 73 | 64 | 73 | 70 | 73 |

As a result of the experiment, it could be confirmed that the second capsule reinforcing component used in combination with the biodegradable polymer as the first encapsulating polymer exhibits excellent biodegradability and stability even when aminobenzylamine and benzidinedisulfonic acid are used in addition to phenylenediamine. In addition, the use of naphthalene diisocyanate, isophorone diisocyanate and xylene diisocyanate as well as methyldiphenyl diisocyanate as the first capsule reinforcing component used in combination with the second encapsulating component showed a good degree of biodegradation and stability. Accordingly, when the microcapsule according to the present invention uses a combination of the first encapsulating component (biodegradable polymer) and the second capsule reinforcing component, and a combination of the second encapsulating component and the first capsule reinforcing component, it can show a remarkable effect in the stability and degree of biodegradation.

On the other hand, in the case of Comparative Example 8, the stability of microcapsule was shown to be

relatively very low. This is the result of Comparative Example 8 using cyclohexanediamine, a simple cyclic compound, not an aromatic compound, as the second capsule reinforcement component, for the preparation of microcapsules, and through this, it is shown that aromatic compounds, not simple cyclic compounds, are essential for the stability of the microcapsules.

**Examples 19 to 22. Preparation of Polyurea Microcapsules**

Microcapsules were prepared according to the compositions of Table 4 below. First, 1 g of silica was dispersed in 58 g of distilled water, and at the same time 1 g of chitosan as a biodegradable polymer was added to prepare a continuous phase 1, and 1 g of phenylenediamine as a second capsule reinforcing component was added to 9 g of distilled water to prepare a continuous phase 2. To 29.5 g of fragrance oil, a combination of polyisocyanate as a second encapsulating component, and methyldiphenyl isocyanate as a first capsule reinforcing component was added to prepare a dispersed phase. Then, the dispersed phase was added to continuous phase 1 and stirred at 2,000 rpm to prepare a Pickering emulsion. Then, a continuous phase 2 and capsule reinforcing inorganic precursors (tetraethyl orthosilicate, methyltrimethoxysilane, and aminopropyltrimethylethoxysilane) were added to the Pickering emulsion, and interfacial polymerization was performed at 80 °C for 12 hours to prepare polyurea microcapsules.

**Experimental Example 4. Comparison of Stability and Degree of Biodegradation of Microcapsules Including Capsule Reinforcing Polymer**

The stability and degree of biodegradation of the microcapsules prepared in Examples 19 to 24 were measured. Stability and the degree of biodegradation were measured in the same manner as in Experimental Example 2 above.

[Table 4]

| | Ex. 10 | Ex. 19 | Ex. 20 | Ex. 21 | Ex. 22 |
|---|---|---|---|---|---|
| Distilled water | 68 | 67.5 | 67 | 67.5 | 67 |
| Silica | 1 | 1 | 1 | 1 | 1 |
| Chitosan | 0.5 | 0.5 | 0.5 | 0.5 | 0.5 |
| Phenylenediamine | 0.5 | 0.5 | 0.5 | 0.5 | 0.5 |
| Polyisocyanate | 0.25 | 0.25 | 0.25 | 0.25 | 0.25 |
| Methyl diphenyl diisocyanate | 0.25 | 0.25 | 0.25 | 0.25 | 0.25 |
| Tetraethylorthosilicate | - | 0.5 | 1 | - | - |
| Methyltrimethoxysilane | - | - | - | 0.5 | 1 |
| Aminopropyltrimethylethoxysilane | | | | | |
| Fragrance oil | 29.5 | 29.5 | 29.5 | 29.5 | 29.5 |
| Total | 100 | 100 | 100 | 100 | 100 |
| Stability(%) | 60 | 80 | 70 | 75 | 65 |
| Degree of biodegradation (%) | 40 | 40 | 40 | 40 | 40 |

As a result of the experiment, it was confirmed that the microcapsules of Examples 19 to 22 further including the capsule reinforcing inorganic precursor had increased stability compared to the microcapsules of Example 10 that did not include the capsule reinforcing inorganic precursor. However, it was confirmed that, as the content of the capsule reinforcing inorganic precursor increased, the microcapsule was easily broken during capsule preparation, and thus stability was rather decreased.

Examples 23 to 26. **Preparation of microcapsules**

Microcapsules were prepared according to the compositions of Table 5 below. First, silica and biodegradation promoting particles ($TiO_2$ and ZnO) were dispersed in 58 g of distilled water, and at the same time 1 g of chitosan as a biodegradable polymer was added to prepare a continuous phase 1, and 1 g of phenylenediamine as a second capsule reinforcing component was added to 9 g of distilled water to prepare a continuous phase 2. To 29.5 g of fragrance oil,

a combination of polyisocyanate as a second encapsulating component, and methyldiphenyl diisocyanate as a first capsule reinforcing component was added to prepare a dispersed phase. Then, the dispersed phase was added to continuous phase 1 and stirred at 2,000 rpm to prepare a Pickering emulsion. Then, a continuous phase 2 and tetraethyl orthosilicate as a capsule reinforcing inorganic precursor were added to the Pickering emulsion, and interfacial polymerization was performed at 80 °C for 12 hours to prepare polyurea microcapsules.

**Experimental Example 5. Confirmation of biodegradability of microcapsules including biodegradation promoting particles**

The stability, biodegradability and photodegradability of the microcapsules prepared in Example above were measured. Stability and the degree of biodegradation were measured in the same manner as in Experimental Example 2 above, and photodegradability was measured with reference to the OECD 316 method. For the degradation measurement period, the energy corresponding to about 10,000 W/m$^2$, which is equivalent to 4 weeks of average annual sunlight in Seoul, was irradiated using a xenon lamp using a sun tester (Suntest XLS+), and then the degree of degradation was measured by the following General Formula 2 by comparing the values before and after COD (Chemical Oxygen Demand).

[General Formula 2]

$$\text{Degradation rate (\%)} = \frac{COD_0 - COD_t \text{ (Carbon content of the substance after a certain period of time)}}{COD_0 \text{ (Carbon content of 500 ppm of substance)}} \times 100$$

According to the European Chemicals Agency (ECHA), it is not clearly defined according to the degree of degradation, but in the case of general biodegradability, it is classified as a degradable substance when it is degraded 20% or more and less than 60% by microorganisms for 4 weeks, and a substance that can be degraded immediately after being degraded 60% or more. Although degree of photodegradation has not yet been clearly defined, in the actual environment, all of microorganisms and sunlight, hydrolysis, pyrolysis, etc. are applied, and there is a need to consider the microorganisms and photodegradation as the two elements among them which may have the most influence.

[Table 5]

| | Ex. 19 | Ex. 23 | Ex. 24 | Ex. 25 | Ex. 26 |
|---|---|---|---|---|---|
| Distilled water | 67.5 | 67.5 | 67.5 | 67 | 67 |
| Silica | 1 | 0.5 | 0.5 | 1 | 1 |
| $Tio_2$ | - | 0.5 | - | 0.5 | - |
| ZnO | - | - | 0.5 | - | 0.5 |
| Chitosan | 0.5 | 0.5 | 0.5 | 0.5 | 0.5 |
| Phenylenediamine | 0.5 | 0.5 | 0.5 | 0.5 | 0.5 |
| Polyisocyanate | 0.25 | 0.25 | 0.25 | 0.25 | 0.25 |
| Methyl diphenyl diisocyanate | 0.25 | 0.25 | 0.25 | 0.25 | 0.25 |
| Tetraethylorthosilicate | 0.5 | 0.5 | 0.5 | 0.5 | 0.5 |
| Fragrance oil | 29.5 | 29.5 | 29.5 | 29.5 | 29.5 |
| Total | 100 | 100 | 100 | 100 | 100 |
| Stability (%) | 80 | 80 | 80 | 80 | 80 |
| Degree of biodegradation (%) | 40 | 40 | 40 | 40 | 40 |
| Photodegradation (%) | 20 | 35 | 22 | 74 | 61 |
| Natural degradability (%) | 52 | 61 | 53.2 | 84.4 | 76.6 |

As a result of the experiment, in the case of Examples 23 to 26 including the biodegradation promoting particles,

the addition of the biodegradation promoting particles did not significantly affect the stability and biodegradability of the capsule, but it was confirmed that the photodegradability was promoted.

**Comparative Example 9. Preparation of Polyurea Microcapsules**

Microcapsules were prepared according to the composition of Table 6 below. A continuous phase was prepared by dispersing Tween 20, arabic gum, and a pre-melamine formaldehyde solution in 54.5 g of distilled water. An emulsion was prepared by slowly adding 30 g of fragrance (dispersed phase) to the continuous phase at 2,000 rpm. After lowering to 1000 rpm, the pH was lowered to 5 with citric acid, and the capsule formation reaction was performed at 70 °C for 3 hours. After terminating the reaction by adjusting the pH to 7.5 using tromethamine, melamine-formaldehyde resin capsules were prepared by adding and adsorbing biodegradation promoting particles.

**Comparative Example 10. Preparation of Polyurea Microcapsules**

Microcapsules were prepared according to the composition of Table 6 below. A continuous phase was prepared by dissolving 0.5 g of polyvinyl alcohol in 63 g of distilled water. 1.8 g of methacrylic acid, 4 g of pentaerythritol triacrylate, and 0.2 g of 2,2' azobis-(2-methylbutyronitrile) were dissolved in 30 g of fragrance to prepare a dispersed phase. The continuous phase was gradually added to the dispersed phase at 2,000 rpm to prepare an emulsion, and then the reaction was carried out at 80 °C for 6 hours to proceed with the capsule formation reaction, and biodegradation promoting particles were added and adsorbed to prepare an acrylic capsule.

**Experimental Example 6. Measurement of stability, biodegradability and photodegradability of microcapsules**

The stability, biodegradability and photodegradability of the microcapsules prepared in Examples above were measured. Stability, biodegradability and photodegradability were measured in the same manner as in Experimental Example 5 above.

[Table 6]

| | Ex. 25 | Com. Ex. 9 | Com. Ex. 10 |
|---|---|---|---|
| distilled water | 67 | 54 | 63 |
| silica | 1 | - | - |
| $TiO_2$ | 0.5 | 0.5 | 0.5 |
| chitosan | 0.5 | - | - |
| phenylenediamine | 0.5 | - | - |
| polyisocyanate | 0.25 | - | - |
| methyl diphenyl diisocyanate | 0.25 | - | - |
| tetraethylorthosilicate | 0.5 | - | - |
| Tween 20 | - | 2 | - |
| Arabic gum | - | 5 | - |
| pre-melamine formaldehyde solution | - | 7.5 | - |
| tromethamine | - | 0.5 | - |
| Citric acid | - | 0.5 | - |
| Polyvinyl alcohol | - | - | 0.5 |
| Methacrylic acid | - | - | 1.8 |
| Pentaerytritol triacrylate | - | - | 4 |
| (2,2' azobis-(2-methylbutyronitrile) | - | - | 0.2 |
| fragrance oil | 29.5 | 30 | 30 |
| Total | 100 | 100 | 100 |

(continued)

| | Ex. 25 | Com. Ex. 9 | Com. Ex. 10 |
|---|---|---|---|
| Stability (%) | 80 | 90 | 85 |
| Degree of biodegradation (%) | 40 | 15 | 18 |
| Photodegradation (%) | 74 | 10 | 15 |
| Natural degradability (%) | 84.4 | 24 | 30.3 |

As a result of the experiment, in the case of a microcapsule including the first encapsulating component, the second encapsulating component, the first capsule reinforcing component and the second capsule reinforcing component as in the present invention, it was confirmed that it has higher biodegradability , photodegradability and natural degradability compared to Comparative Examples 9 and 10, which did not.

**Experimental Example** 7. **Fragrance intensity evaluation after washing**

Washing evaluation was performed to confirm applicability as a fabric softener using the microcapsules prepared in Examples above. First, as for the test fiber, a commercially available cotton towel (30 cm × 20 cm) was washed repeatedly in a washing machine 5 times using a standard amount of general laundry detergent, and then dehydrated. Based on 100 parts by total weight of the composition, 1 part by weight of previously prepared microcapsules was added into an aqueous solution including 5 parts by weight of Tween 20, and then the composition was stored at 50 °C for 7 days. After putting a standard amount of the composition (0.67 ml/L washing water) into a stirred washing machine, it was treated with a rinse course, and after dehydration, a cotton towel was taken out. Then, the cotton towel was dried for 12 hours at a humidity of 30% and a temperature of 25 °C. At this time, three time points (immediately after washing, after drying and after rubbing) were set and 20 experienced panelists performed sensory evaluation to evaluate the fragrance intensity. Fragrance intensity was graded on a scale of a minimum of 0 points to a maximum of 5 points, based on 0 points for microcapsule-free cotton towels, and this was repeated three times or more and expressed as an average value. The sensory evaluation processed immediately after preparing the composition including the microcapsules and the sensory evaluation processed after the composition was stored for 7 days are shown in Table 7 and FIG. 2, respectively.

<Evaluation Criteria>

0 points: There is hardly any fragrance left.
5 points: There is a lot of fragrance left.

[Table 7]

| After 7 days | Com. Ex. 2 | Ex. 1 | Ex. 7 | Ex. 8 | Ex. 10 | Ex. 19 | Ex. 23 | Ex. 25 |
|---|---|---|---|---|---|---|---|---|
| Immediately after washing | 1.21 | 1.81 | 1.34 | 1.31 | 1.2 | 1.13 | 1.08 | 1.27 |
| After drying | 0.86 | 0.58 | 0.61 | 0.76 | 0.55 | 0.57 | 0.68 | 0.59 |
| After friction | 0.75 | 0.64 | 1.21 | 1.52 | 2.58 | 3.51 | 3.41 | 3.46 |

As shown in Table 7 and FIG. 2, in the case of Examples 7, 8, 10 and 19 including a biodegradable polymer, an encapsulating polymer, and a capsule reinforcing polymer, the capsule stability and fragrance diffusing properties were strongly exhibited, in particular, in the case of Example 19 in which the capsule reinforcing inorganic precursor was used, it was confirmed that the most excellent stability and fragrance diffusing properties were maintained. In addition, in the case of Examples 23 and 25 to which the natural degradation promoting particles were applied, it was confirmed that stability and fragrance diffusing properties similar to those of Example 19 were maintained. Through the above results, it was confirmed that the application of the natural degradation promoting particles did not affect the performance of the capsule.

**Experimental Example 8. Confirmation of degradation promoting effect**

In order to confirm the degradation promoting effect of the microcapsules of the present invention, the capsules

of Example 25 to which the natural degradation promoting particles were added were diluted in distilled water to a concentration of 500 ppm. Then, the degree of degradation in natural sunlight was compared using a particle size analyzer (Mastersizer 3000, Malvern) to measure the capsule size change over time. In order to confirm the degradation promoting effect, a transparent container, an opaque container, and a polypropylene container having an opaque wall surface (50 cm×50 cm×50) were filled with 100 L of water and the sample was filled to a depth of 15 cm in a specially prepared water-based condition, and then the container was fixed, and the degree of degradation by natural light was confirmed by the size change with time (FIG. 3).

As shown in FIG. 3, the capsule was degraded for 25 days by sunlight and reduced in size, and it was confirmed that the degradation of the capsule occurred even in water, but no degradation occurred in the opaque container, so there was no change in the size of the capsule. Through the above results, although the capsules are stably present in the form of a product, it can be confirmed that it means that degradation occurs when discharged into the natural world after use.

## Claims

**1.** A method of preparing microcapsules, comprising:

preparing a Pickering emulsion by mixing a continuous phase 1 comprising inorganic particles and a first encapsulating component, and a dispersed phase 1 including a second encapsulating component and a first capsule reinforcing component; and
mixing and encapsulating a continuous phase 2 comprising a second capsule reinforcing component and the Pickering emulsion;
wherein the first encapsulating component and the second encapsulating component each comprise an amine group or a hydroxyl group;
the second encapsulating component and the first capsule reinforcing component are each a compound comprising two or more functional groups selected from the group consisting of an amine group, an isocyanate group, an acyl halide group, a chloroformate group and an acrylate group; an oligomer using the compound as a monomer; or a polymer using the compound as a monomer.

**2.** The method of claim 1, further comprising adsorbing natural degradation promoting particles to the capsule.

**3.** The method of claim 1, wherein the inorganic particles are metal particles, non-metal particles, or a mixture thereof.

**4.** The method of claim 1, wherein the first encapsulating component is a biodegradable polymer.

**5.** The method of claim 1, wherein the first encapsulating component is comprised in an amount of 0.001 to 20 parts by weight, based on the total weight of the composition for preparing microcapsules.

**6.** The method of claim 1, wherein the second encapsulating component is a compound represented by the following Chemical Formula 1:

[Chemical Formula 1]

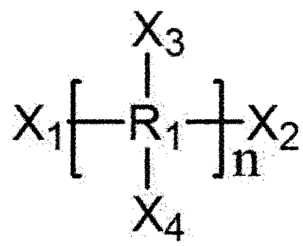

In Chemical Formula 1, $R_1$ is an acrylate group or an alkylene group having 1 to 50 carbon atoms in which a hetero atom is substituted or unsubstituted; a cyclic hydrocarbon having 3 to 60 carbon atoms; or a compound comprising an alkylene group having 1 to 50 carbon atoms and a cyclic hydrocarbon having 3 to 60 carbon atoms, $X_1$ to $X_4$ are each independently selected from the group consisting of hydrogen, an amine group, an acyl halide

group, an isocyanate group, a chloroformate group and an acrylate group,
n is an integer greater than or equal to 1.

7. The method of claim 1, wherein the second encapsulating component is comprised in an amount of 0.001 to 10 parts by weight, based on the total weight of the composition for preparing microcapsules.

8. The method of claim 1, wherein when the first encapsulating component and the second capsule reinforcing component have amine groups, the second encapsulating component and the first capsule reinforcing component have acrylate groups or isocyanate groups.

9. The method of claim 1, wherein when the first encapsulating component and the second capsule reinforcing component have hydroxyl groups, the second encapsulating component and the first capsule reinforcing component have isocyanate groups, acyl halide groups, chloroformate groups or acrylate groups.

10. The method of claim 1, wherein the first capsule reinforcing component is one or more compounds selected from the group consisting of a monomer represented by the following Chemical Formula 2, methylenediphenyl diisocyanate, naphthalene diisocyanate, and isophorone diisocyanate; an oligomer thereof; or a polymer thereof:

[Chemical Formula 2]

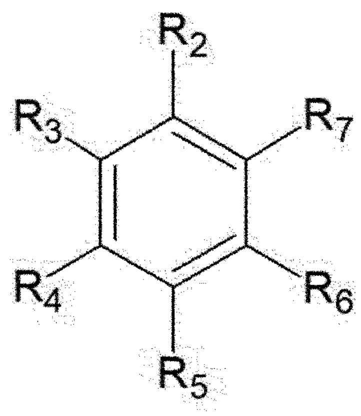

In Chemical Formula 2, $R_2$ to $R_7$ each independently comprise hydrogen; an alkyl group having 1 to 5 carbon atoms; an alkenyl group having 2 to 5 carbon atoms; an alkyl isocyanate having 1 to 5 carbon atoms; an isocyanate group; an alkylacyl halide group having 1 to 5 carbon atoms; an acyl halide group; an alkylchloroformate group having 1 to 5 carbon atoms; a chloroformate group; an alkyl acrylate group having 1 to 5 carbon atoms; or an alkylacrylate group;
one or more of $R_2$ to $R_7$ in Chemical Formula 2 is a compound comprising one of an isocyanate group, an acyl halide group, a chloroformate group, and an acrylate group.

11. The method of claim 1, wherein the second capsule reinforcing component is one or more compounds selected from the group consisting of a monomer represented by the following Chemical Formula 3, melamine, and benzidinedisulfonic acid; an oligomer thereof; or a polymer thereof:

[Chemical Formula 3]

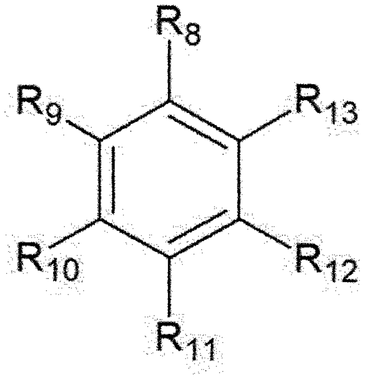

In Chemical Formula 3, $R_8$ to $R_{13}$ each independently comprise hydrogen; an amine group; a hydroxyl group; an alkyl group having 1 to 5 carbon atoms; an alkylamine group having 1 to 5 carbon atoms; a hydroxyalkyl group having 1 to 5 carbon atoms; or an alkenyl group having 2 to 5 carbon atoms;
one or more of Rs to $R_{13}$ in Chemical Formula 3 is a compound comprising either an amine group or a hydroxyl group.

**12.** The method of claim 1, wherein the first encapsulating component and the second encapsulating component are comprised in a weight ratio of 1:0.1 to 1.

**13.** The method of claim 1, wherein the first encapsulating component and the second capsule reinforcing component are comprised in a weight ratio of 1:0.1 to 100.

**14.** The method of claim 1, wherein the first encapsulating component, the second encapsulating component and the first capsule reinforcing component are comprised in a weight ratio of 1: 0.01 to 100: 0.01 to 1.

**15.** The method of claim 1, wherein the Pickering emulsion further comprises a capsule reinforcing inorganic precursor.

**16.** The method of claim 15, wherein the capsule reinforcing inorganic precursor is a compound represented by the following Chemical Formula 4:

[Chemical Formula 4]

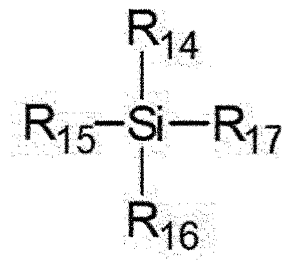

In Chemical Formula 4, $R_{14}$ to $R_{17}$ are each independently hydrogen; an alkoxy group having 1 to 5 carbon atoms; an alkyl group having 1 to 5 carbon atoms; or a hydrocarbon compound having 1 to 5 carbon atoms comprising one or more functional groups selected from the group consisting of an amine group, a thiol group, a hydroxyl group, a carbonyl group, a carboxyl group, and an ether group.

**17.** The method of claim 15, wherein the capsule reinforcing inorganic precursor is comprised in an amount of 0.001 to 10 parts by weight, based on the total weight of the composition for preparing microcapsules.

**18.** The method of claim 2, wherein the natural degradation promoting particles are selected from the group consisting of titanium oxide, zinc oxide, zirconium oxide, tungsten oxide, platinum, platinum oxide, and gold chloride.

**19.** The method of claim 2, wherein the natural degradation promoting particles are comprised at a concentration of 0.1

to 10,000 ppm.

**20.** The method of claim 1, wherein the Pickering emulsion comprises an active substance selected from the group consisting of fragrance oils, sunscreens, dyes, catalysts, antioxidants and drugs.

**21.** The method of claim 1, wherein the polymer formed by reacting the first encapsulating component and the second encapsulating component forms an outer capsule wall of the microcapsule.

**22.** A microcapsule prepared according to any one of claims 1 to 21.

**23.** The microcapsule of claim 22, wherein the microcapsule has a diameter of 0.1 to 100 μm.

**24.** A fabric softener composition comprising the microcapsule of claim 22.

**25.** A microcapsule comprising a first encapsulating component, a second encapsulating component, a first capsule reinforcing component, a second capsule reinforcing component, and inorganic particles.

Fig. 1

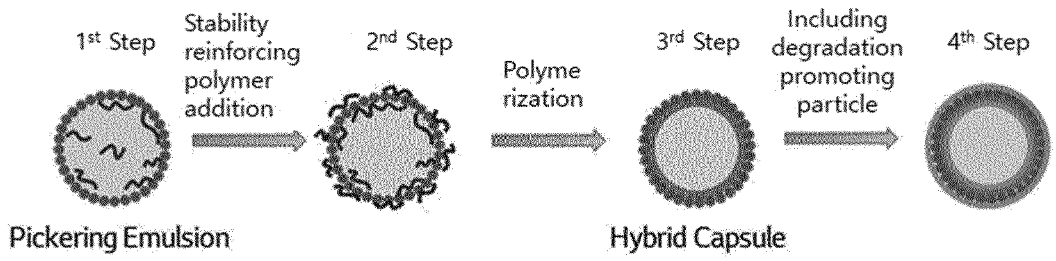


Fig. 2

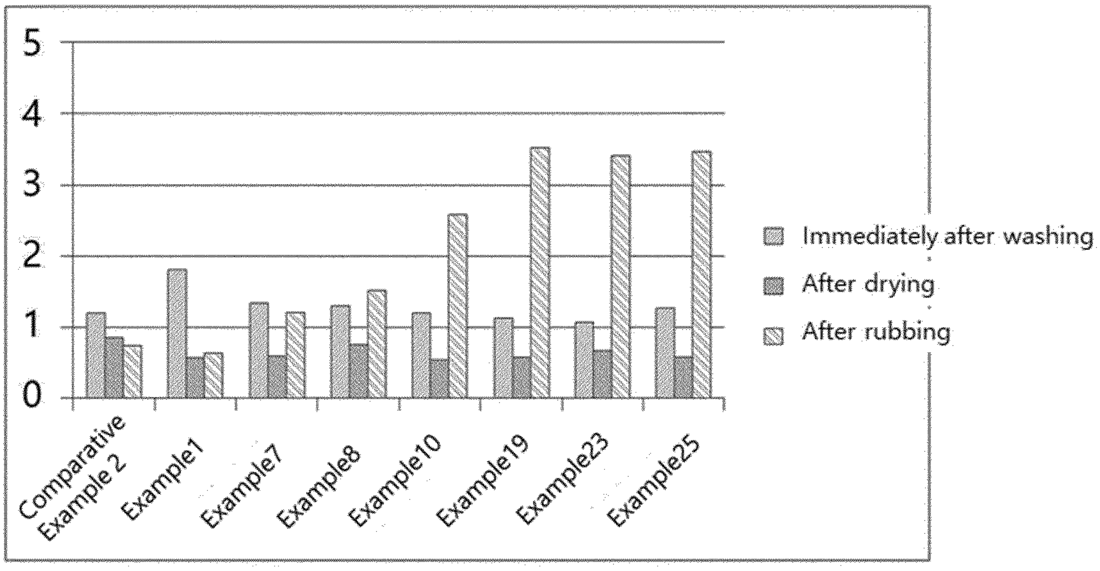


Fig. 3

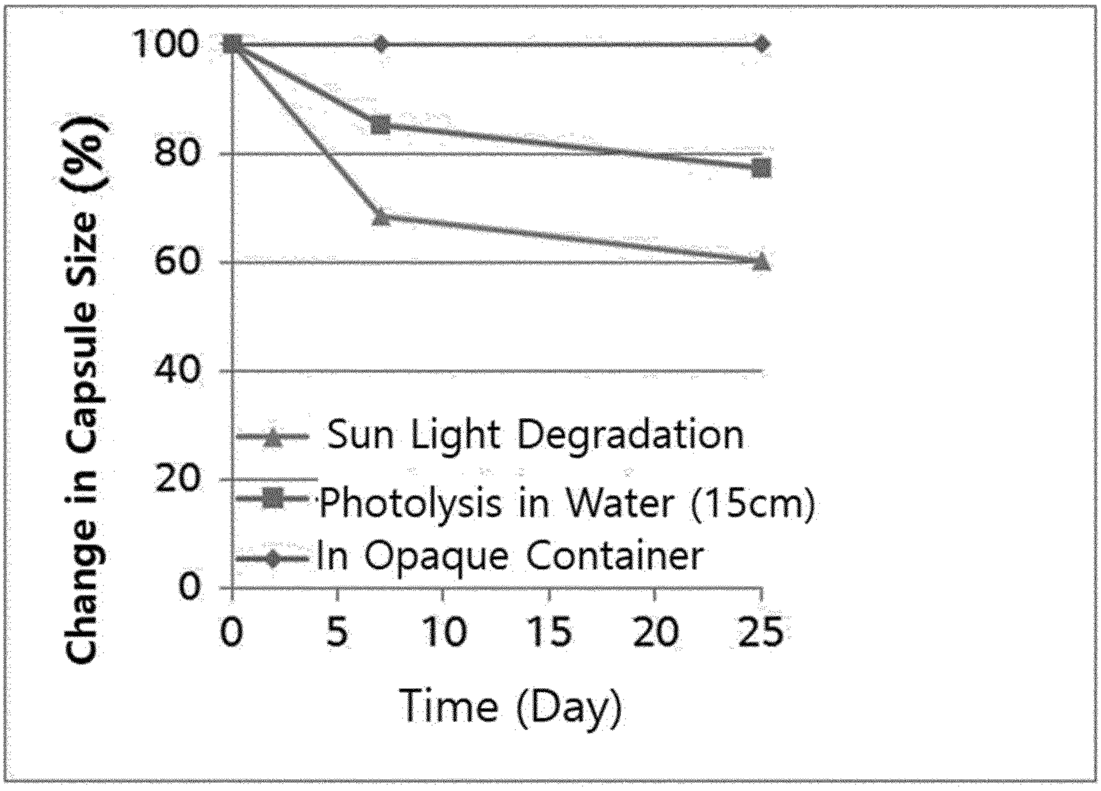
Change in Capsule Size (%)
100
80
60
40
20
0
0
5
10
15
20
25
Time (Day)
Sun Light Degradation
Photolysis in Water (15cm)
In Opaque Container

## INTERNATIONAL SEARCH REPORT

International application No. **PCT/KR2020/009600**

**A. CLASSIFICATION OF SUBJECT MATTER**

**B01J 13/16**(2006.01)i; **B01J 13/18**(2006.01)i; **C11D 3/00**(2006.01)i

According to International Patent Classification (IPC) or to both national classification and IPC

**B. FIELDS SEARCHED**

Minimum documentation searched (classification system followed by classification symbols)

B01J 13/16(2006.01); A61K 8/11(2006.01); A61K 8/19(2006.01); A61K 8/25(2006.01); A61K 8/73(2006.01); B01J 13/14(2006.01); B32B 15/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 마이크로캡슐 (microcapsule), 에멀전 (emulsion), 폴리머 (polymer), 실리카 (silica), 중합 (polymerization)

**C. DOCUMENTS CONSIDERED TO BE RELEVANT**

| Category* | Citation of document, with indication, where appropriate, of the relevant passages | Relevant to claim No. |
|---|---|---|
| X | US 2016-0354749 A1 (FIRMENICH SA) 08 December 2016 (2016-12-08)<br>See abstract; paragraphs [0004], [0026]-[0037] and [0044]-[0047]; and claims 1 and 5. | 1,3,5,7-10,12-14,20-23,25 |
| Y | | 2,4,15-19,24 |
| A | | 6,11 |
| Y | KR 10-2019-0068369 A (LG CHEM, LTD. et al.) 18 June 2019 (2019-06-18)<br>See paragraphs [0002] and [0042]; and claims 1-4. | 2,4,18-19,24 |
| Y | US 2016-0158121 A1 (INTERNATIONAL FLAVORS & FRAGRANCES INC.) 09 June 2016 (2016-06-09)<br>See paragraphs [0074]-[0079]. | 15-17 |
| A | US 2006-0199011 A1 (JAHNS, E.) 07 September 2006 (2006-09-07)<br>See entire document. | 1-25 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 February 2021** | **17 February 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
PCT/KR2020/009600

C. DOCUMENTS CONSIDERED TO BE RELEVANT

| Category* | Citation of document, with indication, where appropriate, of the relevant passages | Relevant to claim No. |
|---|---|---|
| A | JP 2004-216241 A (TOYO INK MFG CO., LTD.) 05 August 2004 (2004-08-05)<br>See entire document. | 1-25 |

Form PCT/ISA/210 (second sheet) (July 2019)

**INTERNATIONAL SEARCH REPORT**
**Information on patent family members**

International application No.
**PCT/KR2020/009600**

| Patent document cited in search report | Publication date (day/month/year) | Patent family member(s) | Publication date (day/month/year) |
|---|---|---|---|
| US 2016-0354749 A1 | 08 December 2016 | CN 105828927 A | 03 August 2016 |
| | | CN 105828927 B | 30 October 2018 |
| | | EP 3083029 A1 | 26 October 2016 |
| | | EP 3083029 B1 | 27 September 2017 |
| | | JP 2017-503643 A | 02 February 2017 |
| | | JP 6598781 B2 | 30 October 2019 |
| | | US 9962674 B2 | 08 May 2018 |
| | | WO 2015-091705 A1 | 25 June 2015 |
| KR 10-2019-0068369 A | 18 June 2019 | None | |
| US 2016-0158121 A1 | 09 June 2016 | US 10085925 B2 | 02 October 2018 |
| | | US 10555879 B2 | 11 February 2020 |
| | | US 2018-0353399 A1 | 13 December 2018 |
| US 2006-0199011 A1 | 07 September 2006 | CN 100345930 C | 31 October 2007 |
| | | CN 1774489 A | 17 May 2006 |
| | | EP 1618166 A1 | 25 January 2006 |
| | | EP 1618166 B1 | 28 July 2010 |
| | | JP 2006-523744 A | 19 October 2006 |
| | | WO 2004-092299 A1 | 28 October 2004 |
| JP 2004-216241 A | 05 August 2004 | JP 4200764 B2 | 24 December 2008 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9944886 B2
- US 9943487 B2


### Non-patent literature cited in the description


- **J. HITCHCOCK et al.** Long-Term Retention of Small, Volatile Molecular Species within Metallic Microcapsules. *ACS Appl. Mater. Interfaces,* 27 July 2015, 14808-14815